(19) Europäisches Patentamt
European Patent Office
Office européen des brevets

(11) Veröffentlichungsnummer : **0 462 989 B1**

# (12) EUROPÄISCHE PATENTSCHRIFT

(45) Veröffentlichungstag der Patentschrift :
**27.10.93 Patentblatt 93/43**

(51) Int. Cl.$^5$ : **G01N 27/406**

(21) Anmeldenummer : **90903775.6**

(22) Anmeldetag : **08.03.90**

(86) Internationale Anmeldenummer :
**PCT/DE90/00167**

(87) Internationale Veröffentlichungsnummer :
**WO 90/10862 20.09.90 Gazette 90/22**

## (54) SENSORELEMENT FÜR GRENZSTROMSENSOREN ZUR BESTIMMUNG DES -g(l)-WERTES VON GASGEMISCHEN.

(30) Priorität : **15.03.89 DE 3908393**

(43) Veröffentlichungstag der Anmeldung :
**02.01.92 Patentblatt 92/01**

(45) Bekanntmachung des Hinweises auf die Patenterteilung :
**27.10.93 Patentblatt 93/43**

(84) Benannte Vertragsstaaten :
**DE FR GB IT SE**

(56) Entgegenhaltungen :
**EP-A- 0 194 082**
**DE-C- 3 707 874**
**DE-C- 3 728 618**
**DE-C- 3 809 154**
**GB-A- 2 184 847**
**GB-A- 2 194 846**

(73) Patentinhaber : **ROBERT BOSCH GMBH**
**Postfach 30 02 20**
**D-70442 Stuttgart (DE)**

(72) Erfinder : **FRIESE, Karl-Hermann**
**Strohgäustrasse 13**
**D-7250 Leonberg (DE)**
Erfinder : **GRÜNWALD, Werner**
**Römerweg 8**
**D-7016 Gerlingen (DE)**
Erfinder : **STAHL, Roland**
**Finkenweg 11**
**D-7149 Freiberg am Neckar (DE)**

EP 0 462 989 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Sensorelement für Grenzstromsensoren nach der Gattung des Hauptanspruchs (siehe z.B. DE-A-3728618). Bei derartigen Sensorelementen, die nach dem Diffusionsgrenzstromprinzip arbeiten, wird der Diffusions grenzstrom im allgemeinen bei einer konstanten, an den beiden Elektroden des Sensorelementes anliegenden Spannung gemessen. Dieser Strom ist in einem bei Verbrennungsvorgängen entstehenden Abgas von der Sauerstoffkonzentration solange abhängig, wie die Diffusion des Gases zur Pumpelektrode die Geschwindig- keit des Gesamtprozesses Diffusion/Kathodenumsetzung/$O^{2-}$-Ionentransport durch Festelektrolyt/Anodenumsetzung bestimmt. Es ist bekannt, derartige, nach dem polarographischen Meßprinzip arbeitende Sensoren in der Weise aufzubauen, daß sowohl Anode als auch Kathode dem zu messenden Gas ausgesetzt sind, wobei die Kathode eine Diffusionsbarriere aufweist, um ein Arbeiten im Diffusionsgrenzstrombereich zu erzielen.

Die bekannten Grenzstromsensoren dienen in der Regel zur Bestimmung des λ-Wertes von Abgasgemischen, der das Verhältnis "Gesamtsauerstoff/zur vollständigen Verbrennung des Kraftstoffs benötigten Sauerstoff" des in einem Zylinder verbrennenden Luft:Kraftstoffgemisches bezeichnet.

Aufgrund einer vereinfachten und kostengünstigen Herstellungsweise hat sich in der Praxis in den letzten Jahren die Herstellung von in Keramikfolien- und in Siebdrucktechnik herstellbaren Sonden und Sensorelementen durchgesetzt.

In einfacher und rationeller Weise lassen sich planare polarographische Sonden ausgehend von plättchen- oder folienförmigen sauerstoffleitenden Festelektrolyten, z. B. aus stabilisiertem Zirkondioxid, herstellen, die beidseitig mit einer (inneren oder äußeren) Pumpelektrode und der dazugehörigen Leiterbahn beschichtet werden.Die innere Pumpelektrode befindet sich dabei in vorteilhafter Weise am Ende eines Diffusionsspaltes oder Diffusionskanals, durch den das Meßgas eindiffundieren kann, und der als Gasdiffusionswiderstand dient.

Aus der DE-OS 35 43 759 sowie den EP-A O 142 992, O 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionsspalt oder Diffusionskanal aufweisen.

In der DE-OS 38 34 987 wird ferner ein Sensorelement für Grenzstromsensoren zur Bestimmung des λ-Wertes von Gasgemischen, insbesondere den Abgasen von Verbrennunpsmotoren mit auf einem $O^{2-}$-Ionen leitenden Festelektrolyten angeordneten Pumpelektrodenpaar beschrieben, bei dem die innere Pumpelektrode über einen Diffusionsspalt Verbindung zum Meßgas hat und der Diffusionsspalt durch eine in Siebdrucktechnik erzeugte Festelektrolytschicht abgedeckt ist.

Nachteilig an den bekannten Sensorelementen, die insbesondere durch Zusammenlaminieren mehrerer Festelektrolytfolien, insbesondere durch Zusammenlaminieren von Folien auf Basis von stabilisiertem $ZrO_2$ hergestellt werden,ist, daß die Ansprechzeit vergleichsweise lang ist.

Nachteilig an den bekannten, aus 4 Elektroden aufgebauten Sonden mit einer Pumpzelle und einer Nernstzelle, z. B. des aus der DE-PS 35 43 599 und 35 43 759 bekannten Typs ist ferner, daß durch Verwendung einer Nernstzelle Luftreferenzelektroden, langzeitstabile Elektroden und konstante Sondentemperaturen erforderlich sind.

### Vorteile der Erfindung

Das erfindungsgemäße Sensorelement mit den kennzeichnenden Merkmalen des Hauptanspruches hat gegenüber den bekannten Sensorelementen für Grenzstromsensoren den wesentlichen Vorteil, daß bei einer vorgegebenen Länge des Diffusionskanals die Ansprechzeit des Sensorelementes und damit des Grenzstromsensors deutlich reduziert werden kann.

Es hat sich gezeigt, daß mit einem erfindungsgemäßen Sensorelement eine Reduzierung der Ansprechzeit gegenüber bekannten vergleichbaren Sensorelementen auf weniger als ein Viertel möglich ist. Ferner ist im Falle der Verwendung eines erfindungsgemäßen Sensorelementes eine Verdoppelung des Signalbereiches durch Vorzeichenumkehr möglich, ohne daß die Elektroden des Systems einer erhöhten Strombelastung ausgesetzt sind. Durch die Vorzeichenumkehr des Signalstroms im Betrieb erfolgt ferner eine ständige Reaktivierung der Elektroden. Das Sensorelement benötigt dabei keine Luftreferenz und kann somit autark im Abgas arbeiten.

Die Herstellung eines erfindungsgemäßen Sensorelementes erfolgt mit Hilfe der bekannten Folientechnologie unter Anwendung bekannter Druckverfahren, insbesondere Siebdruckverfahren, ausgehend von üblichen bekannten Festelektrolytfolien, wobei Elektroden und Leiterbahnen auf Festelektrolytplättchen oder -folien aufgedruckt, die Plättchen oder Folien zusammenlaminiert und der Diffusionskanal z. B. durch Ausbrennen geeigneter Hohlraumbildner, beispielsweise einem Polyurethanpulver, Theobromin, oder einem mit Ruß gefüllten plastischen Material erzeugt wird. Dabei können z. B. Arbeitsmethoden angewandt werden, wie sie beispielsweise aus der DE-OS 30 17 947 bekannt sind.

Gemäß einer besonders vorteilhaften Ausgestaltung der Erfindung sind Festelektrolytzelle und Pumpzelle mit einem dazwischenliegenden Diffusionsspalt übereinander angeordnet und durch eine gasdichte elektrische Isolationsschicht miteinander verbunden. In vorteilhafter Weise läßt sich die Isolationsschicht beisnielsweise nach einem Verfahren erzeugen, wie es näher in der DE-OS 37 26 479 beschrieben wird.

Bei diesem Verfahren wird zur Erzeugung von elektrischisolierenden Bereichen oder Schichten in oder auf $O^{2-}$-Ionen leitenden, mit 3- oder niedrigerwertigen Kationen dotierten Festelektrolytsubstraten auf die elektrisch zu isolierenden Bereiche des Festelektrolytsubstrates eine Suspension oder Paste mit mindestens einer Verbindung mit einem oder verschiedenen 5- oder höherwertigen Kationen aufgebracht, worauf man die 5- oder höherwertigen Kationen durch Erhitzen in das Festelektrolytsubstrat eindiffundieren läßt.

Das erfindungsgemäße Sensorelement läßt sich anstelle bekannter Sensorelemente planarer Struktur in Grenzstromsensoren üblicher Bauart, insbesondere Magersensoren ($\lambda > 1$) verwenden. Gegebenenfalls kann das erfindungsgemäße Sensorelement mit einem Heizelement ausgestattet sein und z. B. als Magersensor für Dieselmotoren, und als solches in ein übliches Sensorgehäuse, z. B. des aus den DE-OS 32 06 903 und 35 37 051 bekannten Typs eingebaut und zur Messung des Kraftstoff-Luft-Verhältnisses in einem mageren Abgas verwendet werden.

## Zeichnung

Die Zeichnung dient der näheren Erläuterung der Erfindung. Im einzelnen sind dargestellt in:

- Fig. 1 ein Zwei-Elektroden-Sensorelement einer Grenzstromsonde des Standes der Technik, von der die Erfindung ausgeht, schematisch und vereinfacht dargestellt;
- Fig. 2 die $O_2$ -Konzentrationsverteilung im Diffusionskanal im stationären Gleichgewicht bei einem Sensorelement gemäß Fig. 1;
- Fig. 3 der $O_2$-Konzentrationsverlauf im Diffusionskanal bei einem Sprung der $O_2$-Konzentration von O auf 1 schematisch für aufeinanderfolgende Zeiten bei einem Sprung der Abgaskonzentration C von O auf 1;
- Fig. 4 der zeitliche Verlauf des Signalstroms (Pumpstrom zwischen Kathode 5 und Anode 4 gemäß Fig. 1) bei einem Sprung der Abgaskonzentration C von O auf 1;
- Fig. 5 ein erfindungsgemäßes Sensorelement mit einer zusätzlichen Pumpzelle, schematisch und vereinfacht dargestellt;
- Fig. 6 die Konzentrationsverteilung im Diffusionskanal im Falle eines Sensorelementes nach der Erfindung gemäß Fig. 5 (stationärer Fall);
- Fig. 7a die Konzentrationsverteilung im Diffusionskanal einer Sonde des Standes der Technik bei einem Sprung der Abgaskonzentration C von O auf 1;
- Fig. 7b die Konzentrationsverteilung im Diffusionskanal im Falle eines erfindungsgemäßen Sensorelementes gemäß Fig. 5 bei einem Sprung der Abgaskonzen- tration C von O auf 1;
- Fig. 8 der zeitliche Verlauf des Signalstroms $i_1$ (Pumpstrom durch zusätzliche Pumpzelle 9) bei Wechsel der Abgaskonzentration von O auf $C_o = 1$;
- Fig. 9 die lineare Abhängigkeit des Signalstroms (= Pumpstroms) von der Abgaskonzentration und
- Fig. 10 eine besonders vorteilhafte Ausführungsform eines erfindungsgemäßen Sensorelementes, schematisch, vereinfacht dargestellt.

Im Falle eines Zwei-Elektroden-Sensorelementes des Standes der Technik, wie es schematisch in Fig. 1 dargestellt ist, besteht bei stationärem Betrieb mit einer $O_2$ -Abgaskonzentration $C_o$ innerhalb einer homogenen Diffusionsbarriere ein Konzentrationsgradient, wie er in Fig. 2 dargestellt ist.

Das Sensorelement 1 besteht aus dem Festelektrolytträger 2 mit Kathode 3 und Anode 4, die die Festelektrolytzelle 5 bilden und dem dazwischenliegenden Diffusionskanal 6 mit der Diffusionsbarriere 7 sowie den Leiterbahnen 3' und 4' mit nicht dargestellten üblichen Anschlüssen. Die Leiterbahnen 3' und 4' weisen gegenüber dem Träger 2 Isolationen 3" bzw. 4", z. B. aus $Al_2O_3$, auf.

Das dynamische Ansprechverhalten eines derartigen Sensorelementes nach dem Stande der Technik wird im wesentlichen durch die Geschwindigkeit der Einstellung des stationären Zustandes des Diffusionsstroms in der Diffusionsbarriere 7 bestimmt. Fig. 3 zeigt schematisch für aufeinanderfolgende Zeiten den Konzentrationsverlauf im Diffusionskanal bei einem Sprung der $O_2$-Konzentration im Abgas von O auf 1. Der stationäre Gleichgewichtszustand wird demnach asymptotisch mit der Zeit erreicht, wie sich auch aus Fig. 4 ergibt. Dort ist der zugehörige zeitliche Verlauf des Diffusionsstroms am Orte der Kathode (entsprechend dem Sensorsignalstrom zwischen Kathode und Anode) aufgetragen. Die Zeit ist dabei in $\frac{D \cdot t}{\ell^2}$ Einheiten angegeben. Dabei stehen D für den Diffusionskoeffizienten, t für die Zeit in Sekunden und $\ell$ für die Länge des Diffusionskanals.

Eine Verkürzung der Diffusionskanallänge bewirkt zwar wesentlich kürzere Diffusionswege und damit schnellere Ansprechzeiten, erhöht aber auch den Diffusionsstrom. Wegen der begrenzten Strombelastbarkeit der Elektroden ergibt sich bei vorgegebenem Meßbereich der $O_2$-Konzentration im Abgas daraus eine Mindestlänge des Diffusionskanals.

Um die Ansprechzeit des Sensorelementes bei einer vorgegeben nen Kanallänge deutlich zu reduzieren, kann man erfindungsgemäß das schematisch in Fig. 5 dargestellte Sensorelement 1 mit einer zusätzlichen, im dargestellten Fall ringförmig angeordneten Pumpzelle 9 mit Anode 10 und Kathode 11 sowie dazugehörigen Leiterbahnen 10' bzw. 11' und Isolierungen 10" bzw. 11" verwenden. Die Leiterbahn 3' ist gegenüber der zusätzlichen Pumpzelle 9 isoliert.

Mit dieser Pumpzelle 9 wird durch Zu- oder Abpumpen von Sauerstoff am Ort der Pumpzelle eine konstante Konzentration aufrechterhalten. Somit ist der Diffusionsstrom $i_2$ (Fig. 6), der zwischen den Elektroden 3 und 4 (Fig. 5) abgepumpt wird, konstant.

Zweckmäßig wird die Pumpzelle in der Mitte des Diffusionskanals angeordnet und die $O_2$-Konzentration an diesem Ort auf 1/4 der maximalen $O_2$-Konzentration $C_{o\ max}$ im Abgas geregelt. Als Regelsignal dient der Diffusionsstrom zwischen Pumpzelle ($x = \ell/2$) und Kathode des Festelektrolyten ($x = \ell$), der durch den elektrischen Strom $i_2$ zwischen Kathode 3 und Anode 4 (Fig. 5) im Festelektrolyten definiert ist. Die Festelektrolytzelle arbeitet im Grenzstrombereich, so daß bei einer Zellspannung von 1 V der durch die Zelle fließende Strom ein eindeutiges Regelsignal darstellt.

In dem in Fig. 6 dargestellten Diagramm, in dem die Konzentrationsverteilung im Diffusionskanal im Falle eines Sensorelementes nach der Erfindung mit zusätzlicher Pumpzelle gemäß Fig. 5 dargestellt ist, bedeuten:

$C_o$ = momentane $O_2$-Konzentration im Abgas;
$C_{o\ max}$ = die maximal mögliche $O_2$-Konzentration im Abgas;
$C_{o\ max/4}$ = 1/4 von $C_{o\ max}$;
$i_o$ = Gesamtstrom zwischen Tunneleingang und Pumpzelle;
$i_1$ = Strom durch die Pumpzelle;
$i_2$ = Strom zwischen Pumpzelle und Kathode (konstant);
$\ell$ = Länge des Diffusionskanals;
$\ell_1$ = $\ell/2$ (Ort der Pumpzelle im Diffusionskanal);
X = variable Wegkoordinate im Diffusionskanal.

Dargestellt sind die stationären Zustände der Konzentrationsverteilung für 2 Grenzfälle der $O_2$-Abgaskonzentration $C \approx 0$ (fett) und $C = C_o$. Mit eingezeichnet sind die zu den einzelnen Teilbereichen gehörenden Diffusionsströme. Es gilt:

$C(x = O) = C_o$
$C(x = 1/2) = C_o\ max/4$
$C(x = 1) = O$ (Grenzstrombedingung)
$i_O = i_1 + i_2$
stationär

$$i_o = D \cdot q \cdot \frac{C_o - C_{o\ max/4}}{\ell/2} = \frac{Dq}{\ell}\left(2C_o - \frac{C_{o\ max}}{2}\right)$$

$$i_2 = D \cdot q \cdot \frac{C_{o\ max/4} - 0}{\ell/2} = \frac{D \cdot q}{\ell}\left(\frac{C_{o\ max}}{2}\right)$$

$$i_1 = i_o - i_2 = \frac{D \cdot q}{\ell} \left\{ 2C_o - C_{o\,max} \right\}$$

dabei bedeuten:

D = Diffusionskoeffizient

q = Diffusionskanalquerschnitt

für $C_o = O$ wird $i_1 = - \frac{D \cdot q}{\ell} \cdot C_o$ max

für $C_o = C_{o\,max}$ wird $i_1 = + \frac{D \cdot q}{\ell} \cdot C_{o\,max}$

Dem Betrag nach wird die Strombelastung der Elektroden der zusätzlichen Pumpzelle somit nicht größer als bei der nach Fig. 1 und 2 beschriebenen Anordnung.

Hingegen werden die Ansprechzeiten deutlich kürzer.

Fig. 7a und 7b veranschaulichen die Konzentrationsverteilung im Diffusionskanal für Sonden nach dem Stand der Technik (Fig. 7a) und für die erfindungsgemäße Ausführung (Fig. 7b) nach einem Sprung der Abgaskonzentration von $C_o \approx O$ (fett) auf $C_o = 1$ für verschiedene Zeiten, und zwar 25 bis 100 Millisekunden (ms.), in jeweils gleichen Abständen.

Der zeitliche Verlauf des Pumpstroms (= Meßsignal) ist in Fig. 8 dargestellt. Dabei wurden die gleichen Kanalabmessungen (Kanallänge $\ell$) und Diffusionskoeffizienten wie bei der Berechnung der Kurve in Fig. 4 nach Stand der Technik angenommen. In der erfindungsgemäßen Ausführung wird der Zustand des stationären Gleichgewichts nach etwa 1/4 der Zeit erreicht, die in der Ausführung nach Stand der Technik benötigt wird.

Fig. 9 veranschaulicht die lineare Abhängigkeit des Signalstromes (= Pumpstroms) von der Abgaskonzentration. Je nach der Abgaskonzentration ändert die Stromrichtung ihr Vorzeichen, wobei gegenüber der Ausführung nach dem Stande der Technik der Meßsignalbereich, also auch die Empfindlichkeit, verdoppelt wird.

Diese Vorzeichenänderung der Stromrichtung im Betrieb der Sonde ist besonders vorteilhaft, da sie im Betrieb zu einer ständigen Reaktivierung der Pumpelektroden führt.

Bei der in Fig. 10 schematisch dargestellten, besonders vorteilhaften Ausführungsform eines erfindungsgemäßen Sensorelementes sind Festelektrolytzelle 5 aus Festelektrolyt träger 2, Elektroden 3 und 4 mit dazugehörigen Leiterbahnen 3' bzw. 4' sowie Pumpzelle 9 aus Festelektrolytträger 2' und Pumpelektroden 10 und 11 sowie den dazugehörigen Leiterbahnen 10' bzw. 11' mit dazwischenliegendem Diffusionskanal 6 übereinander angeordnet und über eine gasdichte Isolationsschicht 12 miteinander verbunden.

Der besseren Übersicht halber wurde die Diffusionsbarriere im Diffusionskanal 6 nicht eingezeichnet.

Die gezeigten Beispiele beziehen sich auf eine lineare Diffusionsstrecke. Durch eine entsprechende Modifizierung kann das Prinzip auch auf ringförmige Diffusionsstrecken angewendet werden.

Die Festelektrolytträger bestehen aus einem Trägermaterial, wie es üblicherweise zur Herstellung von Sensorelementen verwendet wird, nämlich aus einem der bekannten, z. B. zur Herstellung von $O^{2-}$-Ionen leitenden Festelektrolytfolien verwendeten Oxide vierwertiger Metalle,wie insbesondere $ZrO_2$, $CeO_2$, $HfO_2$ und $ThO_2$ mit einem Gehalt an zweiwertigen Erdalkalioxiden und/oder vorzugsweise dreiwertigen Oxiden der seltenen Erden. In typischer Weise kann der Träger zu etwa 50 bis 97 Mol-% aus $ZrO_2$, $CeO_2$, $HfO_2$ oder $ThO_2$ und zu 50 bis 3 Mol-% aus CaO, MgO oder SrO und/oder Oxiden der seltenen Erden und insbesondere $Y_2O_3$ bestehen. Als vorteilhaft hat es sich erwiesen, zur Herstellung der Sensorelemente als Träger Folien aus ungesintertem Keramikmaterial mit einer Schichtstärke von O,3 bis 1,O mm, insbesondere von etwa O,5 mm zu verwenden.

Die Elektroden der Pumpzelle 9 und Festelektrolytzelle 5 sowie die dazugehörigen Leiterbahnen bestehen vorzugsweise aus einem Metall der Platingruppe, insbesondere Platin, oder aus Legierungen von Metallen der Platingruppe oder Legierungen von Metallen der Platingruppe mit anderen Metallen. Gegebenenfalls enthalten sie ein keramisches Stützgerüstmaterial, z. B. in Form eines YSZ-Pulvers, mit einem Volunenanteil von vorzugsweise etwa 4O Vol.-%. Sie sind porös und möglichst dünn. Vorzugsweise weisen sie eine Dicke von 8 bis 15 $\mu$m auf. Die zu den Elektroden gehörenden Leiterbahnen bestehen vorzugsweise ebenfalls aus Platin oder einer Platinlegierung des beschriebenen Typs. Sie können ferner ebenfalls ausgehend von einer Paste auf Edelmetall-Cermetbasis erzeugt werden.

Zum Aufdrucken der Elektroden und Leiterbahnen geeignete Pasten können in bekannter Weise unter Verwendung von organischen Bindemitteln und/oder Haftverbesserern, Weichmachern und organischen Lösungsmitteln hergestellt werden. Sollen dabei gleichzeitig isolierende Zwischenschichten erzeugt werden, so können den Pasten geringere Mengen an Verbindungen mit einem 5-wertigen oder höherwertigen Kation zugesetzt werden, z. B. $Nb_2O_5$. Als haftverbessernde Zusätze eignen sich z. B. $Al_2O_3$ oder $ZrO_2$.

In den Figuren nicht dargestellte gasdichte Abdeckschichten für die Außenelektroden bestehen beispielsweise aus einer Schicht auf $Al_2O_3$- oder Mg-Spinell-Basis, wie sie üblicherweise in planaren Sersorelementen zur Abdeckung von Elektroden verwendet werden. Poröse Engoben können in üblicher bekannter Weise aus einer $Al_2O_3$- und/oder Mg-Spinell-Matrix mit darin eingelagerten $ZrO_2$-Partikeln des aus der DE-OS 37 37 215 bekannten Typs bestehen.

In vorteilhafter Weise wird die Diffusionsbarriere 7 aus einem grob porös sinternden keramischen Material, z. B. auf $Al_2O_3$- oder $ZrO_2$-Basis erzeugt. Die Porosität der Diffusionsbarriere kann dabei durch Zusatz von Porenbildnern eingestellt werden, die beim Sinterprozeß verbrennen, sich zersetzen oder verdampfen. Typische Porenbildner, die verwendet werden können, sind z. B. Thermalrußpulver, Kunststoffe, z. B. auf Polyurethanbasis, Salze, z. B. Ammoniumcarbonat und organische Substanzen, wie z. B. Theobromin und Indanthrenblau. Derartige Porenbildner werden dem porös sinternden Ausgangsmaterial in einer solchen Menge zugesetzt, daß ein Material mit einer Porosität von z. B. 1O bis 5O % anfällt. Der mittlere Porendurchmesser, der durch die Teilchengröße des verwendeten Porenbildners bestimmt werden kann, liegt vorzugssweise bei etwa O,1 bis 1O µm.

Die Diffusionsbarriere 7 kann in vorteilhafter Weise ferner derart ausgestaltet sein, daß sowohl eine Knudsen- als auch eine Gasphasendiffusion stattfindet. Dies bedeutet, daß die Diffusionsbarriere 7 ein Kanalsystem für eine Mischdiffusion aus Knudsen- und Gasphasendiffusion aufweist, wie es näher in der DE-OS 37 28 289 beschrieben wird.

<u>Beispiel</u>

Zur Herstellung eines Sensorelementes des in Fig. 1O schematisch dargestellten Typs wurden als Träger 2 und 2' Folien aus mit Yttrium stabilisiertem Zirkoniumdioxid einer Stärke von O,3 mm verwendet. Der Diffusionskanal wurde in Dickschichttechnik durch eine Siebdruckschicht aus einem Gemisch aus Theobromin und grobkörnigem $ZrO_2$ mit einer Korngröße von 1O µm eingebracht, wobei das Theobromin beim späteren Sinterprozeß im Temperaturbereich um 3OO °C unter Hinterlassen eines etwa 3O µm hohen Spaltes verdampfte.

Das Aufbringen der aus Platin bestehenden Elektroden erfolgte in bekannter Siebdrucktechnik, wobei auf die die äußeren Elektroden tragenden Oberflächen der Festelektrolytschichten im Bereich der Leiterbahnen der äußeren Elektroden zuvor etwa 10 µm dicke $Al_2O_3$-Isolationsschichten aufgetragen wurden. Die Leiterbahnen wurden ausgehend von einer üblichen Pt-Cermetpaste aus 85 Gew.-Teilen Pt-Pulver und 15 Gew.-Teilen YSZ-Pulver erzeugt.

Zur Erzeugung der nicht dargestellten Engoben auf den äußeren Elektroden 4 und 1O wurde eine Paste auf $Al_2O_3$-Basis aufgedruckt. Die Engoben hatten ein Stärke von ca. 3O µm.

Im dargestellten Beispiel wurden die Elektroden 1O und 11 der Pumpzelle 9 derart auf den Träger 2' aufgedruckt, daß die Pumpzelle in der Mitte des Diffusionskanals 6 lag. Die Isolationsschicht 12 wurde nach dem in der DE-OS 37 26 479 näher beschriebenen Verfahren ausgehend von einer $Nb_2O_5$/ $ZrO_2$-Mischung erzeugt.

Der aus den Trägern 2 und 2' sowie den aufgedruckten Schichten, Elektroden und Zuleitungen gebildete Sandwich wurde etwa 3 Stunden lang bei einer Temperatur im Bereich von ca. 13OO °C gesintert.

Das hergestellte Sensorelement wurde in ein Gehäuse des aus der DE-OS 32 O6 9O3 bekannten Typs eingesetzt und zur BeStimmung des $\lambda$-Wertes von Gasgemischen verwendet. Es wurden ausgezeichnet reproduzierbare Ergebnisse erhalten.

Vorzugsweise erfolgt die Herstellung eines erfindungsgemäßen Sensorelementes maschinell im Mehrfachnutzen. In vorteilhafter Weise liegt die Breite des Sensorelementes bei etwa 4 bis 6 mm. Die Elektrodenbreite beträgt vorzugsweise etwa O,8 bis 1 mm.

## Patentansprüche

1. Sensorelement für Grenzstromsensoren zur Bestimmung des Lambda-Wertes von Gasgemischen, insbesondere von Abgasen von Verbrennungsmotoren, mit einer Festelektrolytpumpzelle aus einem auf einem Festelektrolytträger angeordneten Paar von Elektroden, von denen die innere Elektrode für das durch einen Diffusionskanal zugeführte Meßgas zugänglich ist, sowie Leiterbahnen für die Elektroden, an die eine Spannung anlegbar ist, dadurch gekennzeichnet, daß das Sensorelement (1) eine zusätzliche Pumpzelle (9) aufweist, die im mittleren Bereich des Diffusionskanals (6) angeordnet ist, und so ausgebildet ist, daß an dieser Stelle die $O_2$-Konzentration auf etwa 1/4 der maximal möglichen $O_2$-Konzentration im

Abgas Konstant gehalten wird.

2. Sensorelement nach Anspruch 1, dadurch gekennzeichnet, daß Festelektrolytpumpzelle 5 und die Zusätzliche Pumpzelle 9 mit einem dazwischenliegenden Diffusionskanal 6 übereinander angeordnet und durch eine gasdichte Isolationsschicht 12 miteinander verbunden sind.

3. Sensorelement nach Anspruch 1, dadurch gekennzeichnet, daß der Diffusionskanal 6 mindestens teilweise mit einer porösen Diffusionsbarriere 7 aus einem temperaturfesten Material, vorzugsweise auf $Al_2O_3$- oder $ZrO_2$-Basis, gefüllt ist.

4. Sensorlement nach Anspruch 1, dadurch gekennzeichnet, daß der Festelektrolytträger 2 der Festelektrolytpump- zelle 5 aus mit $Y_2O_3$ stabilisiertem $ZrO_2$ besteht.

5. Sensorelement nach einem der Ansprüche 1 bis 4, dadurch gekennzeichnet, daß der Träger 2' der Pumpzelle 9 aus mit $Y_2O_3$ stabilisiertem $ZrO_2$ besteht.

6. Sensorelement nach Anspruch 2, dadurch gekennzeichnet, daß die gasdichte Isolationsschicht 12 durch Eindiffundierenlassen von 5- oder höherwertigen Kationen in die Träger von Pumpzelle 9 und Festelektrolytpumpzelle 5 erhalten worden ist.

## Claims

1. Sensor element for limit current sensors for determining the lambda value of gas mixtures, in particular of exhaust gases from internal combustion engines, with a solid electrolyte pumping cell of a pair of electrodes arranged on a solid electrolyte carrier, of which the inner electrode is accessible to the measuring gas which is fed through a diffusion channel, and conductor tracks for the electrodes to which a voltage can be applied, characterised in that the sensor element (1) has an additional pumping cell (9) which is arranged in the central region of the diffusion channel (6) and is constructed such that at this point, the $O_2$ concentration is kept constant at about 1/4 of the maximum possible $O_2$ concentration in the exhaust gas.

2. Sensor element according to Claim 1, characterised in that the solid electrolyte pumping cell 5 and the additional pumping cell 9 with a diffusion channel 6 lying in between are arranged one on top of the other and are connected to each other by a gastight insulating layer 12.

3. Sensor element according to Claim 1, characterised in that the diffusion channel 6 is at least partly filled with a porous diffusion barrier 7 of a temperature-resistant material, preferably on an $Al_2O_3$ or $ZrO_2$ basis.

4. Sensor element according to Claim 1, characterised in that the solid electrolyte carrier 2 of the solid electrolyte pumping cell 5 consists of $ZrO_2$ which is stabilised with $Y_2O_3$.

5. Sensor element according to one of Claims 1 to 4, characterised in that the carrier 2' of the pumping cell 9 consists of $ZrO_2$ which is stabilised with $Y_2O_3$.

6. Sensor element according to Claim 2, characterised in that the gastight insulating layer 12 has been obtained by allowing pentavalent or higher-valent cations to diffuse into the carriers of pumping cell 9 and solid electrolyte pumping cell 5.

## Revendications

1. Elément de capteur pour des capteurs de courant limite servant à déterminer la valeur λ des mélanges gazeux notamment de gaz d'échappement de moteurs thermiques, comprenant une cellule de pompage à électrolyte fixe formée par une paire d'électrodes placées sur un support d'électrolyte fixe, et parmi celles-ci l'électrode intérieure reçoit le signal de mesure appliqué par un canal de diffusion, ainsi que des chemins conducteurs pour les électrodes recevant une tension, élément de capteur (1) caractérisé en ce qu'il comporte une cellule de pompage (9) supplémentaire prévue dans la zone centrale du canal de diffusion (6) et qui est réalisée pour qu'à cet endroit, la concentration en $O_2$ soit maintenue constante à environ 1/4 de la concentration en $O_2$ maximale possible dans les gaz d'échappement.

2. Elément de capteur selon la revendication 1, caractérisé en ce que la cellule de pompage à électrolyte fixe (5) et la cellule de pompage supplémentaire (9) sont superposées avec interposition d'un canal de diffusion (6) et ces cellules sont reliées par une couche d'isolation (12) étanche aux gaz.

3. Elément de capteur selon la revendication 1, caractérisé en ce que le canal de diffusion (6) est rempli au moins partiellement d'une barrière de diffusion (7) poreuse en une matière réfractaire de préférence à base de $Al_2O_3$ ou de $ZrO_2$.

4. Elément de capteur selon la revendication 1, caractérisé en ce que le support d'électrolyte solide (2) de la cellule de pompage à électrolyte solide (5) se compose de $ZrO_2$ stabilité par $Y_2O_3$.

5. Elément de capteur selon l'une des revendications 1 à 4, caractérisé en ce que le support (2') de la cellule de pompage (9) est en dioxyde de zirconium $ZrO_2$ stabilisé par $Y_2O_3$.

6. Elément de capteur selon la revendication 2, caractérisé en ce que la couche d'isolation étanche aux gaz (12) est obtenue par diffusion de cations de valence 5- ou plus dans le support de cellule de pompage (9) et de cellule de pompage (5) à électrolyte solide.

FIG.1

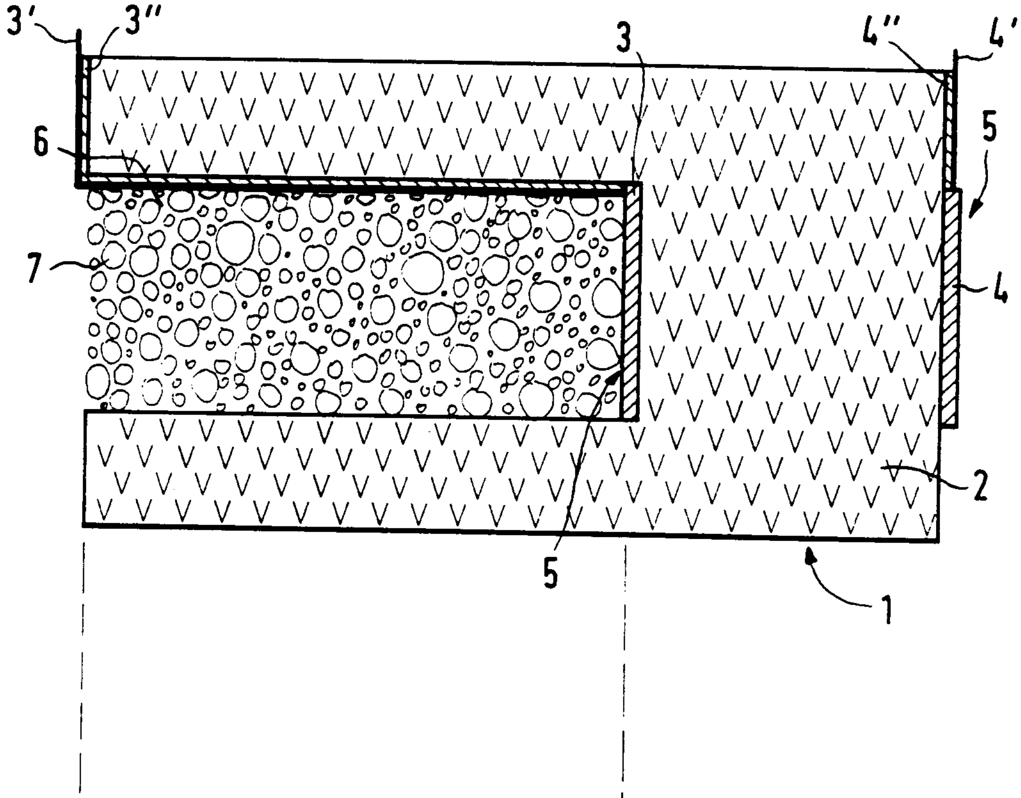


FIG.2

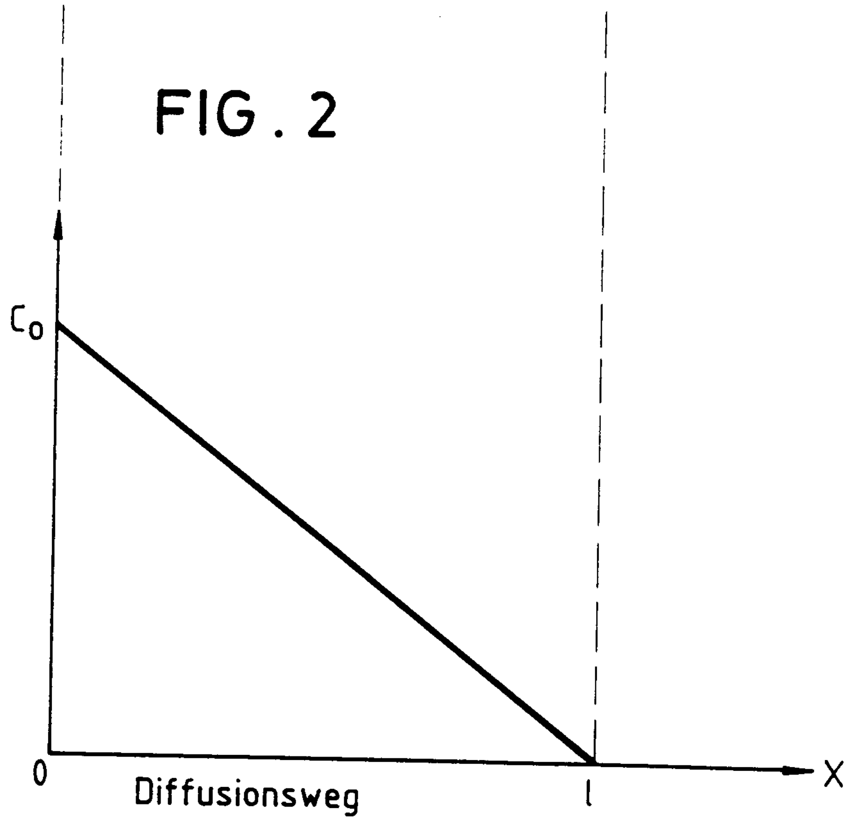

FIG.3

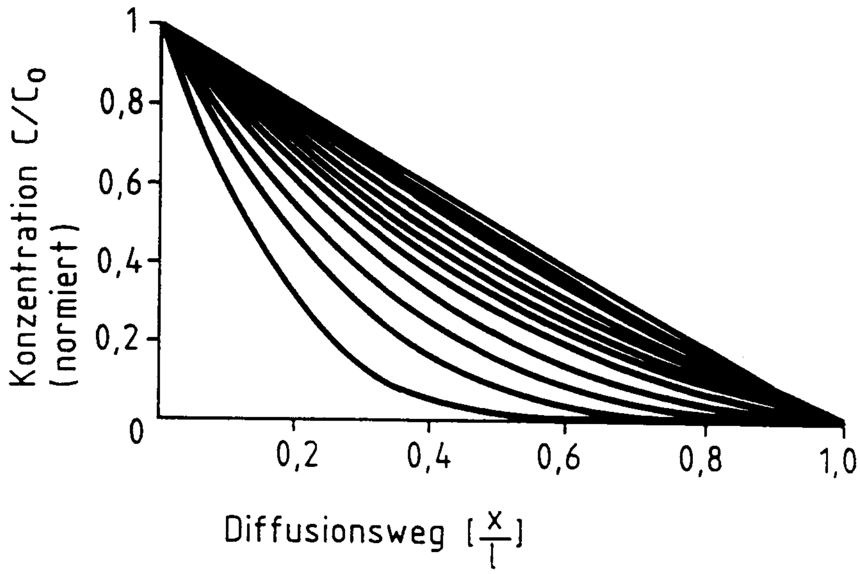
1
0,8
0,6
0,4
0,2
0
Konzentration C/C$_o$
(normiert)
0,2
0,4
0,6
0,8
1,0
Diffusionsweg [x/l]

FIG.4

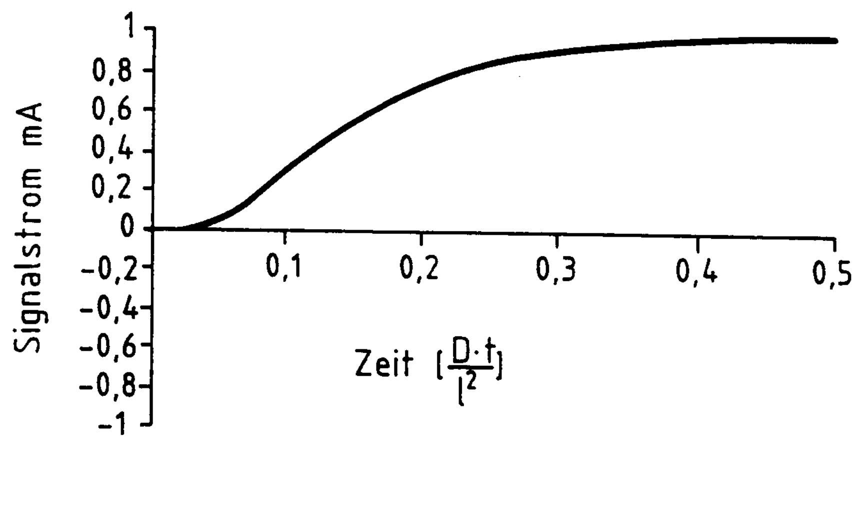
1
0,8
0,6
0,4
0,2
0
-0,2
-0,4
-0,6
-0,8
-1
Signalstrom mA
0,1
0,2
0,3
0,4
0,5
Zeit [D·t/l$^2$]

FIG. 5

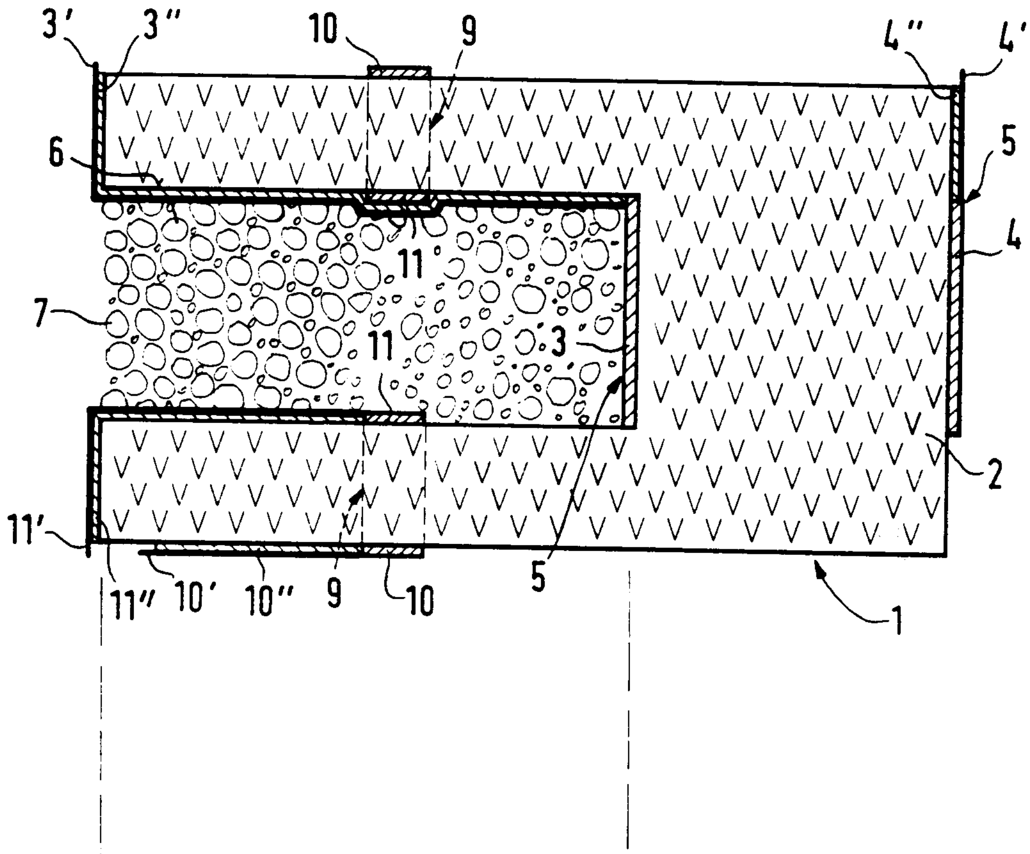
3'
3''
10
9
4''
4'
5
6
4
11
7
11
3
5
2
11'
11''
10'
10''
9
10
5
1

FIG. 6

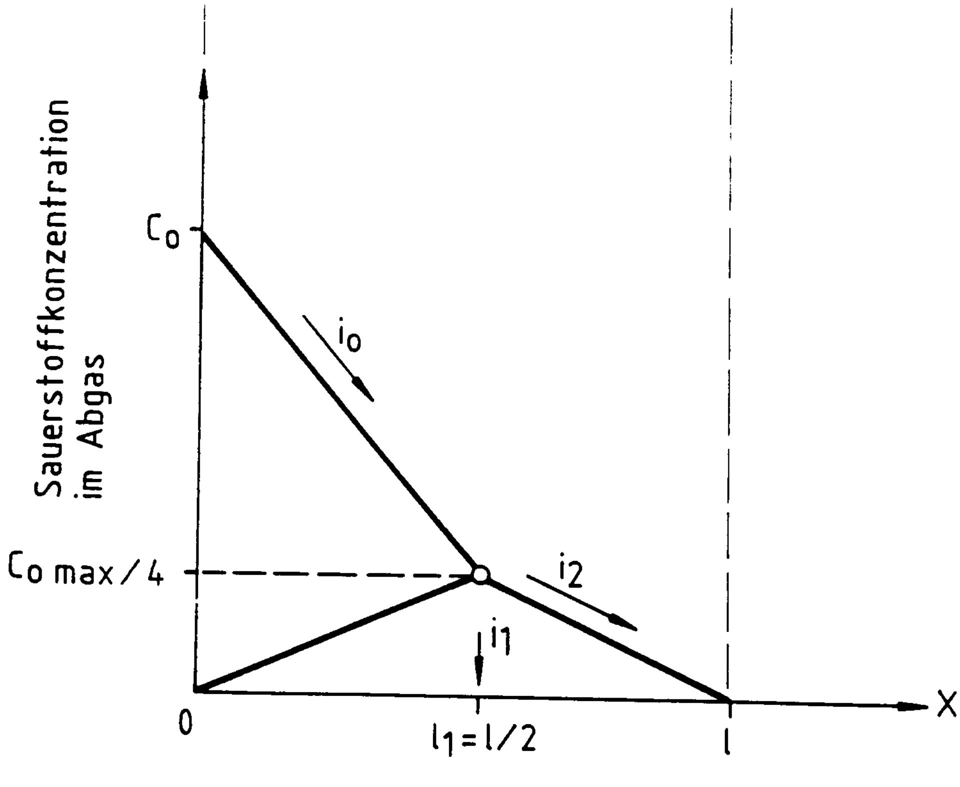
Sauerstoffkonzentration
im Abgas
Co
io
Co max / 4
i2
i1
0
l1 = l/2
l
X

FIG.7A

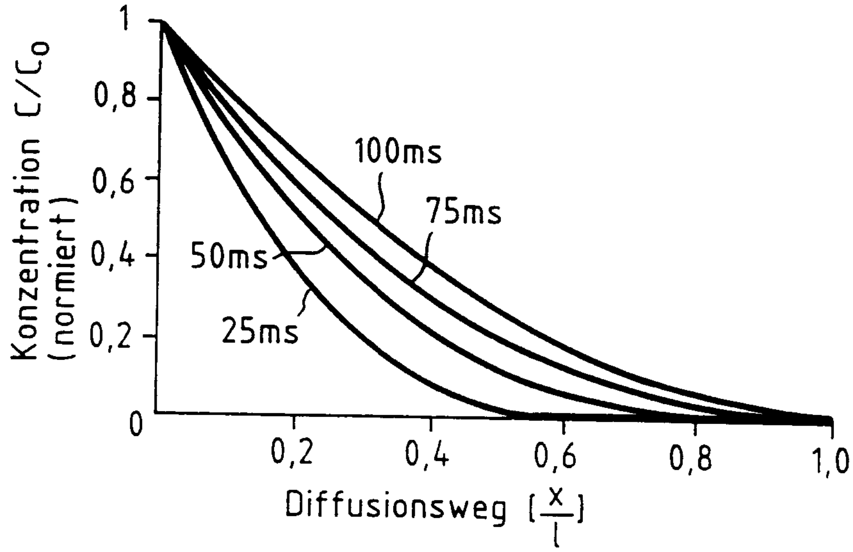
1
0,8
0,6
0,4
0,2
0
Konzentration C/C0
(normiert)
100ms
75ms
50ms
25ms
0,2
0,4
0,6
0,8
1,0
Diffusionsweg [x/l]

FIG.7B

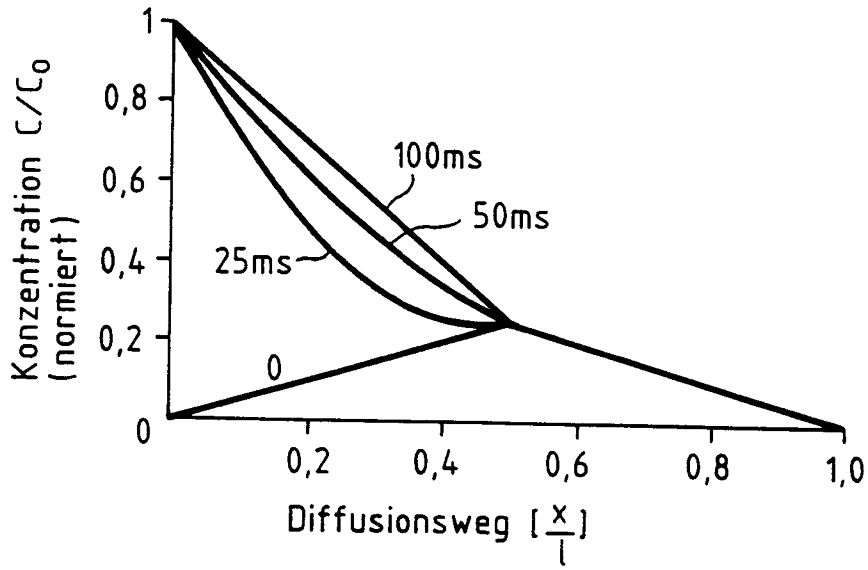
1
0,8
0,6
0,4
0,2
0
Konzentration C/C0
(normiert)
100ms
50ms
25ms
0
0,2
0,4
0,6
0,8
1,0
Diffusionsweg [x/l]

FIG.8

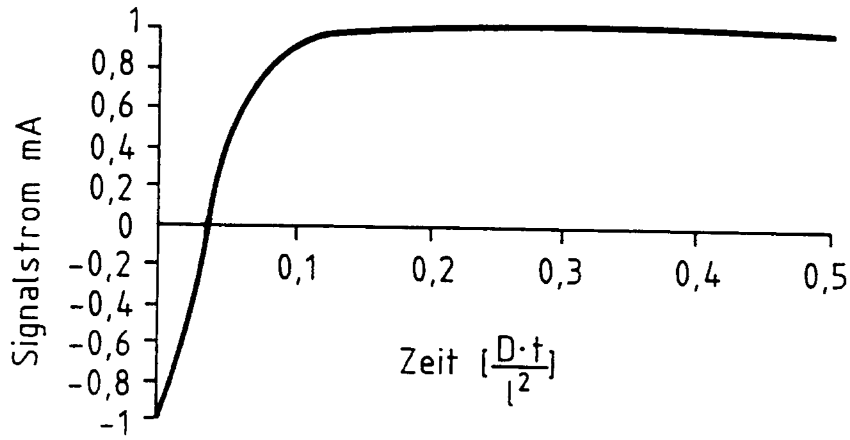
1
0,8
0,6
0,4
0,2
0
-0,2
-0,4
-0,6
-0,8
-1
Signalstrom mA
0,1
0,2
0,3
0,4
0,5
Zeit [$\frac{D \cdot t}{l^2}$]

FIG.9

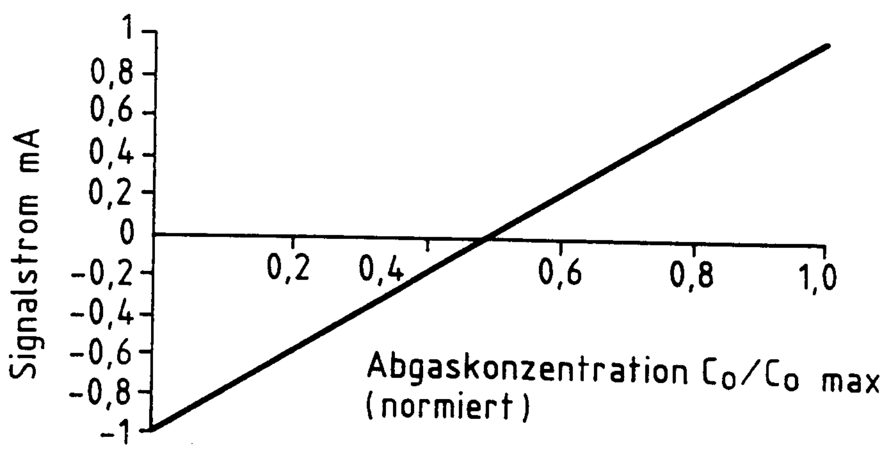
1
0,8
0,6
0,4
0,2
0
-0,2
-0,4
-0,6
-0,8
-1
Signalstrom mA
0,2
0,4
0,6
0,8
1,0
Abgaskonzentration Co/Co max
(normiert)

FIG. 10

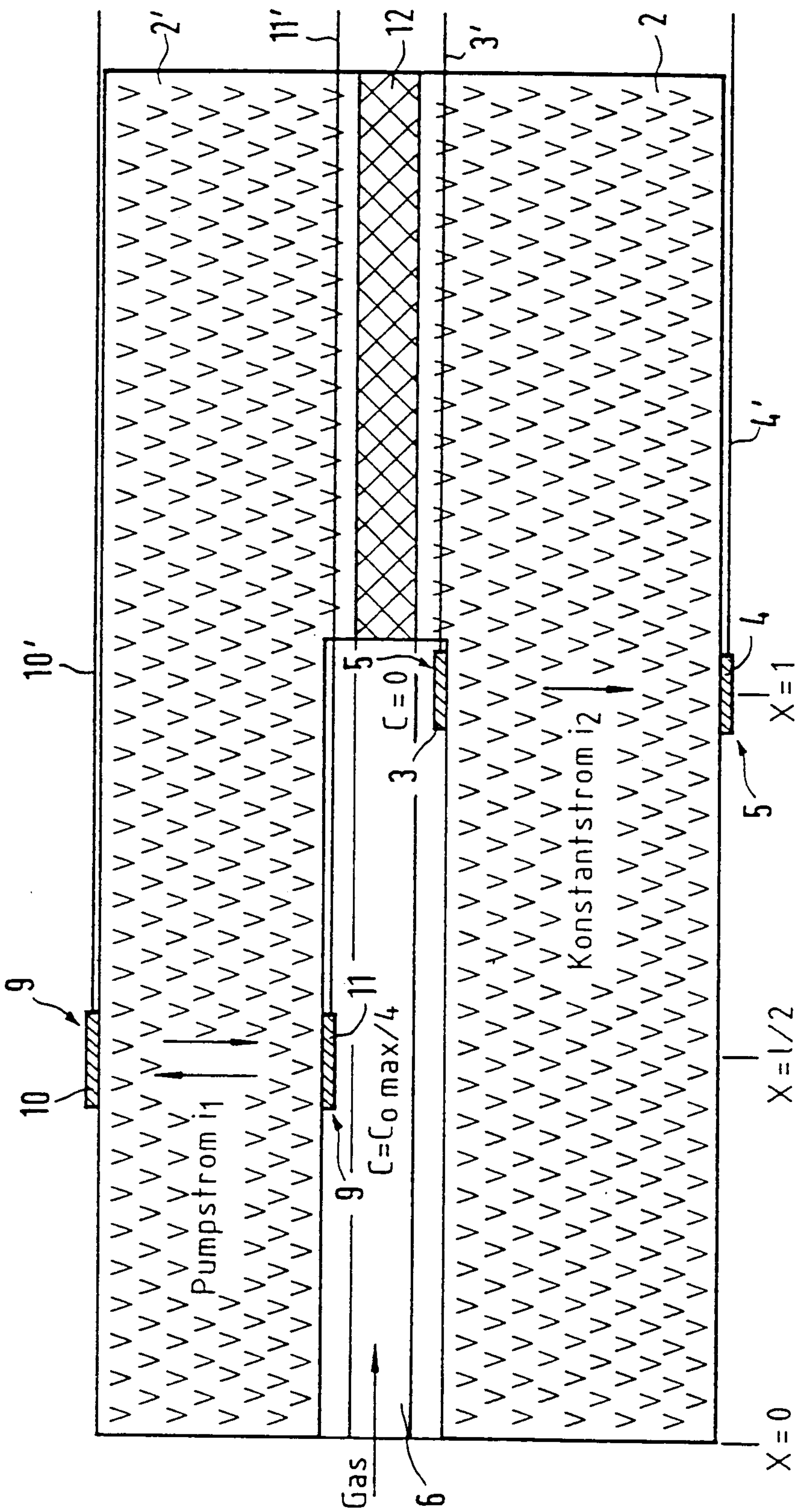
2'
11'
12
3'
2
10'
4'
4
X = 1
5
C = 0
3
Konstantstrom $i_2$
9
10
11
Pumpstrom $i_1$
C=Co max/4
X = l/2
X = 0
Gas
6